# EUROPÄISCHE PATENTANMELDUNG

(11) **EP 2 645 032 A1**
(43) Veröffentlichungstag der Anmeldung: **02.10.2013**
(21) Anmeldenummer: 12002945.9
(22) Anmeldetag: 26.04.2012
(51) Int. Cl.: F25J 3/04

(54) **Transportables Paket mit einer Coldbox und Verfahren zum Herstellen einer Tieftemperatur-Luftzerlegungsanlage**

(30) Priorität: 29.03.2012 DE 102012006479
(71) Anmelder: Linde Aktiengesellschaft, 80331 Munich (DE)
(72) Erfinder: Lochner, Stefan, 85567 Grafing (DE); Moll, Anton, 82399 Raisting (DE)
(74) Vertreter: Imhof, Dietmar

(57) **Zusammenfassung**

Die Erfindung betrifft ein transportables Paket mit einer Coldbox (61), in deren Inneren mindestens eine Rohargonsäule (65) einer Tieftemperatur-Luftzerlegungsanlage angeordnet ist, die dazu bestimmt ist, in der Tieftemperatur-Luftzerlegungsanlage mit einer Niederdrucksäule zusammenzuwirken und einen Rohargon-Kopfkondensator (19) aufweist, der als Kondensator-Verdampfer ausgebildet ist. Die Rohargonsäule (65)enthält Stoffaustauschelemente, wobei die Stoffaustauschelemente in mindestens einem Teilbereich der Rohargonsäule (65)durch eine geordnete Packung gebildet werden, die aus gefalteten Metallblechen gefertigt ist. Die Metallbleche weisen eine Blechstärke von 0,2 mm oder weniger auf. Die geordnete Packung weist eine spezifische Oberfläche von mindestens als 1000 m²/m³ auf. Außerdem betrifft die Erfindung ein Verfahren zum Herstellen einer Tieftemperatur-Luftzerlegungsanlage mittels eines derartigen transportablen Pakets

## Beschreibung

Die Erfindung betrifft ein transportables Paket mit einer Coldbox für eine Tieftemperatur-Luftzerlegungsanlage gemäß dem Oberbegriff des Patentanspruchs 1.

Solche Einheiten werden allgemein als "Packaged Unit" (PU) bezeichnet und sind beispielsweise in EP 1041353 B1 oder US 2007199344 A1 beschrieben.

Verfahren und Vorrichtungen zur Tieftemperaturzerlegung von Luft im Allgemeinen sind zum Beispiel aus Hausen/Linde, Tieftemperaturtechnik, 2. Auflage 1985, Kapitel 4 (Seiten 281 bis 337) bekannt.

Das Destillationssäulen-System kann bei der Erfindung als Zwei-Säulen-System (zum Beispiel als klassisches Linde-Doppelsäulensystem) oder auch als Drei- oder Mehr-Säulen-System ausgebildet sein. Es kann zusätzlich zu den Kolonnen zur Stickstoff-Sauerstoff-Trennung und der Rohargonsäule weitere Vorrichtungen zur Gewinnung hochreiner Produkte und/oder anderer Luftkomponenten, insbesondere von Edelgasen aufweisen, beispielsweise eine Reinargonsäule und/oder eine Krypton-Xenon-Gewinnung.

Üblicherweise werden in Luftzerlegungsanlagen konventionelle Rektifizierböden oder geordnete Packungen (structured packing) einer spezifischen Oberfläche (Packungsdichte) von 250 bis maximal 750 m²/m³ eingesetzt.

Als "Kondensator-Verdampfer " wird ein Wärmetauscher bezeichnet, in dem ein erster kondensierender Fluidstrom in indirekten Wärmeaustausch mit einem zweiten verdampfenden Fluidstrom tritt. Jeder Kondensator-Verdampfer weist einen Verflüssigungsraum und einen Verdampfungsraum auf, die aus Verflüssigungspassagen beziehungsweise Verdampfungspassagen bestehen. In dem Verflüssigungsraum wird die Kondensation (Verflüssigung) eines ersten Fluidstroms durchgeführt, in dem Verdampfungsraum die Verdampfung eines zweiten Fluidstroms. Verdampfungs- und Verflüssigungsraum werden durch Gruppen von Passagen gebildet, die untereinander in Wärmeaustauschbeziehung stehen.

Im Folgenden werden die Begriffe "spezifische Oberfläche einer Packung" und "Packungsdichte" synonym verwendet. Eine besonders "dichte" Packung besitzt also eine besonders hohe spezifische Oberfläche.

Unter einer "Coldbox" wird hier eine isolierende Umhüllung verstanden, die einen wärmeisolierten Innenraum vollständig mit Außenwänden umfasst; in dem Innenraum sind zu isolierenden Anlagenteile angeordnet, zum Beispiel ein oder mehrere Trennsäulen und/oder Wärmetauscher. Die isolierende Wirkung kann durch entsprechende Ausgestaltung der Außenwände und/oder durch die Füllung des Zwischenraums zwischen Anlagenteilen und Außenwänden mit einem Isoliermaterial bewirkt werden. Bei der letzteren Variante wird vorzugsweise ein pulverförmiges Material wie zum Beispiel Perlite verwendet. Sowohl das Destilliersäulen-System zur Stickstoff-Sauerstoff-Trennung einer Tieftemperatur-Luftzerlegungsanlage als auch der Hauptwärmetauscher und weitere kalte Anlagenteile müssen von einer oder mehreren Coldboxen umschlossen sein. Die Außenmaße der Coldbox bestimmen üblicherweise die Transportmaße des Pakets bei vorgefertigten Anlagen. Unter der "Höhe" einer Coldbox wird die Dimension in der vertikalen Richtung bezogen auf die Orientierung der Coldbox im Anlagenbetrieb verstanden; der "Querschnitt" ist die Fläche senkrecht dazu (Horizontale). Während des Transports bestimmt die Höhe der Coldbox die Transportlänge, der Querschnitt Transporthöhe und -breite.

PUs werden in einer Fabrik gefertigt, die regelmäßig weit vom Aufstellungsort der Luftzerlegungsanlage entfernt sind. Dies ermöglicht eine weitgehende Vorfertigung und damit eine Minimierung des Herstellungsaufwandes am Aufstellungsort, wo häufig sehr viel schwierigere Bedingungen herrschen. Das vorgefertigte Paket beziehungsweise mehrere vorgefertigte Pakete werden von der Fabrik zum Aufstellungsort transportiert, das Coldbox-Paket mit einer oder mehreren Trennsäulen in liegender Anordnung. Für derartige Transporte bestehen Beschränkungen hinsichtlich der Länge und Breite der Pakete, weil gepackte Kolonnen in der Regel eine größere Bauhöhe erfordern als Bodenkolonnen; der HETP-Wert (HETP = height per theoretical plate = Höhe eines theoretischen Bodens) einer 750-er Packung ist wesentlich größer als der eines Siebbodens, wie er typischerweise in LZA Kolonnen eingesetzt wird. Größere Anlagen mit gepackten Kolonnen werden mit geringerem Vorfertigungsgrad erstellt; insbesondere wird die Coldbox erst am Aufstellungsort aufgebaut.

Alternativ wird die Rohargonsäule als geteilte Säule mit zwei nebeneinander angeordneten Teilsäulen ausgeführt. Dies erfordert aber zusätzliche Leitungen und mindestens eine Pumpe zur strömungstechnischen Verbindung der beiden Teile, bewirkt also einen höheren apparativen und energetischen Aufwand.

Der Erfindung liegt die Aufgabe zugrunde, ein transportables Paket der eingangs genannten Art so zu gestalten, dass es auch für Tieftemperatur-Luftzerlegungsanlagen einer Kapazität anwendbar ist, für die bisher keine Vorfertigung der Säulen-Coldbox als Ganzes bei günstigem Energieverbrauch und relativ geringem apparativen Aufwand möglich war.

Diese Aufgabe wird durch die kennzeichnenden Merkmale des Patentanspruchs gelöst.

Es wurde zwar bereits vorgeschlagen, geordnete Packungen einer Packungsdichte 750 m²/m³ und mehr einzusetzen, um die Bauhöhe der Kolonne zu verringern (siehe zum Beispiel EP 636237 B1 = WO 9319336 A1 = US 5613374). Solche Packungen werden regelmäßig aus Aluminium gefertigt. Von derartig dichter Packung wurde jedoch bei PUs bisher nicht Gebrauch gemacht, weil mit der dichten Packung gleichzeitig eine Erhöhung des Querschnitts der Kolonne und Kosten und damit der Transportbreite des Pakets über die zulässigen Werte hinaus verbunden gewesen wäre.

Im Rahmen der Erfindung hat sich nun herausgestellt, dass durch den Einsatz einer Packung mit besonders geringer Blechstärke trotz hoher Packungsdichte ein überraschend hoher Wert für die auf den Querschnitt der Kolonne bezogene Kapazität erreicht werden kann; umgekehrt bedeutet das einen relativ geringen Durchmesser der Kolonnen bei besonders geringer Höhe. Auf das Coldbox-Paket bezogen weisen sowohl Transportbreite als auch Transporthöhe trotz hoher Kapazität von Kolonne und Luftzerlegungsanlage relativ niedrige Werte auf. Der Vorteil, auch Luftzerlegungsanlagen mit relativ hoher Kapazität in Form eines Pakets der eingangs genannten Art vorfertigen zu können, ist so groß, dass die erhöhten Kosten durch Verwendung einer speziellen Packung bei Weitem gerechtfertigt sind. Beispielweise kann der Herstellungsaufwand einschließlich Blechmantel und Zubehör für eine Trennsäule mit 1200-er Packung geringer sein als bei einer hohen Säulen mit 750-er Packung mit gleicher Kapazität und Trennleistung. Die Montagekosten eingerechnet

Bei der Erfindung kann es günstig sein, wenn zum Beispiel mindestens ein Abschnitt der Rohargonsäule vollständig mit dem im Patentanspruch 1 beschriebenen Packungstyp gefüllt ist. Die Erfindung kann aber auch dadurch realisiert werden, dass der Teilbereich, in dem diese spezielle Packung eingesetzt ist, sich nur über einen Teil eines Abschnitts der Rohargonsäule erstreckt und im Rest dieses Abschnitts andere Stoffaustauschelemente eingebaut sind.

Hinsichtlich der Zahl der Säulen in dem Paket kann die Erfindung in einer Vielzahl von Varianten angewendet werden, zum Beispiel in den folgenden:
- Das Paket enthält nur die Rohargonssäule mit Rohargon-Kopfkondensator und keine weitere Trennsäule.
- Das Paket enthält zusätzlich zur Rohargonsäule eine Reinargonsäule mit Kopfkondensator und Sumpfverdampfer, mit oder ohne weitere Trennsäulen
- Das Paket enthält neben der Rohargonsäule eine Niederdrucksäule oder eine Doppelsäule aus Hochdrucksäule und Niederdrucksäule, die neben der Rohargonsäule angeordnet ist, und gegebenenfalls zusätzlich eine Reinargonsäule.
- Das Paket enthält neben der Rohargonsäule eine Mischsäule, in der flüssiges Sauerstoffprodukt der Niederdrucksäule in direktem Stoffaustausch mit einem Teil der Einsatzluft verdampft und schließlich als gasförmiges Unrein-Sauerstoffprodukt gewonnen wird und die Rohargonsäule angeordnet ist.

Es ist besonders günstig, wenn die Höhe der Coldbox geringer als 47 Meter ist. Damit lässt sich eine Transportlänge des Pakets von weniger als 47,5m erreichen. Je nach Transportbedingungen kann im Rahmen der Erfindung auch eine maximale Coldboxhöhe von 40 bis 43 Metern erreicht werden. In einer besonders bevorzugten Ausführungsform liegt die Höhe der Coldbox zwischen 29 und 47 Metern, insbesondere zwischen 35 und 43 Metern.

Vorzugsweise beträgt der "minimale Durchmesser" des Querschnitts der Coldbox nicht mehr als 4,15 Meter. Damit lässt sich eine Transporthöhe des Pakets von weniger als 4,20 Metern erreichen.

Unter dem "minimalen Durchmesser des Querschnitts der Coldbox" wird die lineare Ausdehnung verstanden, welche das kleinere der beiden Transportmaße quer zur Fahrtrichtung bestimmt, üblicherweise die Transporthöhe. Dieser minimale Durchmesser wird zum Beispiel bei rechteckigem Querschnitt durch die kleinere Seitenlänge, bei quadratischem Querschnitt durch die Seitenlänge des Quadrats und bei kreisförmigem Querschnitt durch den Kreisdurchmesser gebildet. In einer besonders bevorzugten Ausführungsform liegt dieser "minimale Durchmesser" zwischen 2,5 und 5 Metern, insbesondere zwischen 3 und 4,2 Metern.

Der Durchmesser des Querschnitts der Coldbox senkrecht dazu ist vorzugsweise kleiner als 5,95 Meter. Dieser Wert bestimmt das größere der beiden Transportmaße quer zur Fahrtrichtung, üblicherweise die Transportbreite. Es lässt sich damit eine Transportbreite von weniger als 6,0 Metern erreichen. Das genannte DurchmesserMaß liegt beispielsweise zwischen 2,0 und 6,0 Metern, insbesondere zwischen 3,0 und 5,0 Metern.

Es kann vorteilhaft sein, wenn in der Coldbox außerdem eine Niederdrucksäule angeordnet ist, wobei der Verdampfungsraum des Rohargon-Kopfkondensators über eine Zwei-Phasen-Rohrleitung mit der Niederdrucksäule verbunden ist und die Zwei-Phasen-Rohrleitung so ausgebildet ist, dass im Betrieb der Tieftemperatur-Luftzerlegungsanlage sowohl Gas als auch Flüssigkeit aus dem Verdampfungsraum des Kopfkondensators an der gleichen Einspeisestelle in die Niederdrucksäule fließen. Hierbei wird Bauhöhe für ansonsten erforderliche Verteiler und Sammler in der Niederdrucksäule eingespart. Zur Minimierung der Bauhöhe bei Packungssäulen speist man das Gas und die Flüssigkeit aus dem Argonsystem an der gleichen Stelle ein. Gegenüber einer getrennten Einspeisung an unterschiedlichen Stellen werden ein Sammler und ein Verteiler eingespart, was einen Meter Bauhöhe kostet. Bei besonders kritischer Transportlänge kann diese Variante Vorteile bieten, obwohl sie verfahrenstechnisch ungünstiger ist.

Die Niederdrucksäule ist dabei vorzugsweise Teil einer klassischen Doppelsäule aus Hochdrucksäule, Hauptkondensator und Niederdrucksäule.

Die Anwendung der Erfindung ist besonders günstig, wenn die Tieftemperatur-Luftzerlegungsanlage zur Verarbeitung von mehr als 10.000 Nm³/h und weniger als 250.000 Nm³/h Einsatzluft im Normalbetrieb ausgelegt ist.

Grundsätzlich kann die Rohargonsäule bei der Erfindung mehrteilig ausgebildet sein, beispielsweise zweiteilig wie in EP 628777 B1 = US 5426946 gezeigt. Vorzugsweise wird sie jedoch bei der Erfindung einteilig ausgeführt, wie es beispielsweise in EP 377117 B2 = US 5019145 dargestellt ist.

Die Erfindung bezieht sich außerdem auf ein Verfahren zum Herstellen einer Tieftemperatur-Luftzerlegungsanlage gemäß Patentanspruch 10, bei dem das oben beschriebene transportable Paket verwendet wird und nach Transport zum Aufstellungsort mit einem Luftverdichter zum Verdichten von Einsatzluft, mit einer Reinigungseinheit für verdichtete Einsatzluft und mit einem Hauptwärmetauscher zum Abkühlen gereinigter Einsatzluft verbunden wird. Die Reinigungseinheit ist beispielsweise als Molekularsiebadsorber ausgebildet. Alternativ kann die Luft auch in einem umschaltbaren Wärmetauscher (Revex oder Regenerator) gereinigt werden; in diesem Fall werden Reinigungseinheit und Hauptwärmetauscher von demselben Apparat gebildet.

Auf analoge Weise kann die Erfindung und ihre Ausgestaltungen auch auf etwas größere Systeme angewendet werden, in denen das transportable Paket nur die Rohargonsäule mit Rohargon-Kondensator enthält. In diesem Fall wird die im Inneren komplett vorgefertigte Säule als im Wesentlichen zylindrisches Bauteil liegend auf die Baustelle transportiert und dort mit der isolierenden Hülle (Coldbox) versehen.

Die Erfindung sowie weitere Einzelheiten der Erfindung werden im Folgenden anhand eines in den Zeichnungen schematisch dargestellten Ausführungsbeispiels näher erläutert. Hierbei zeigen:
- Figur 1: ein vereinfachtes Prozessdiagramm einer Tieftemperatur-Luftzerlegungsanlage gemäß der Erfindung,
- Figur 2: eine vereinfachte Seitenansicht eines erfindungsgemäßen Pakets und
- Figur 3: dasselbe Paket in Draufsicht.

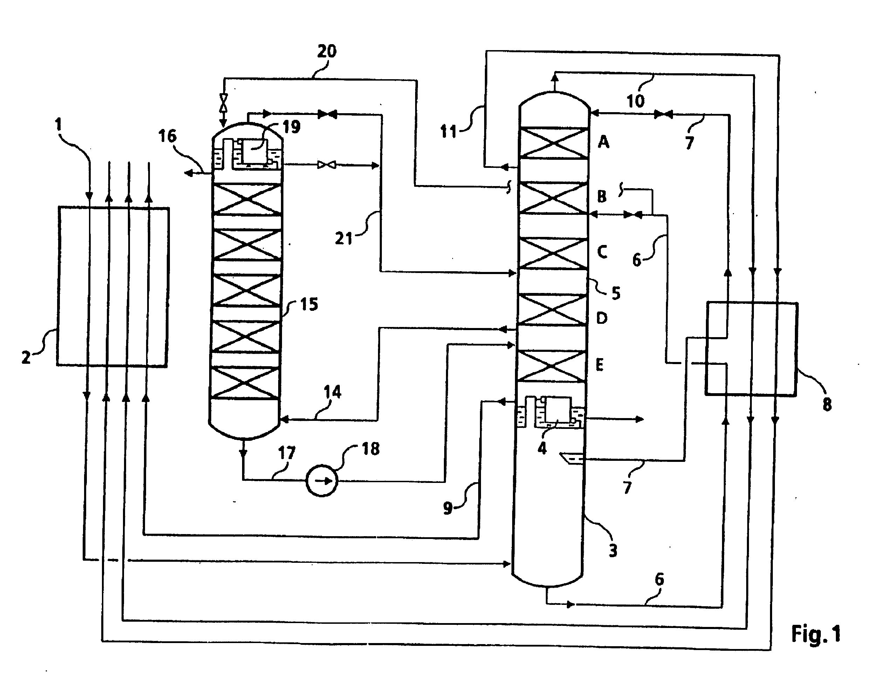

Bei dem in Figur 1 dargestellten Verfahren wird gereinigte Luft 1 unter einem Druck von 4 bis 20 bar, vorzugsweise 5 bis 12 bar in einem Hauptwärmetauscher 2 gegen Produktströme auf etwa Taupunkt abgekühlt und in das Destillationssäulen-System eingeleitet, das hier eine Hochdrucksäule 3, eine Niederdrucksäule 5 und eine Rohargonsäule 15 aufweist. Die Hochdrucksäule 3 steht über einen gemeinsamen Kondensator-Verdampfer 4, den Hauptkondensator, in Wärmeaustauschbeziehung zu einer Niederdrucksäule 5. In dem Ausführungsbeispiel wird die gesamte Einsatzluft 1 in die Hochdrucksäule 3 eingeführt.

Sumpfflüssigkeit 6 und Stickstoff 7 werden aus der Hochdrucksäule 3 abgezogen, in einem Gegenströmer 8 unterkühlt und in die Niederdrucksäule 5 eingedrosselt. Aus der Niederdrucksäule werden Sauerstoff über Produktleitungen Sauerstoff 9, Stickstoff 1 und unreiner Stickstoff 11 entnommen. Die Produkte können auch mindestens teilweise flüssig entnommen werden. Dies ist der Übersichtlichkeit halber in dem Verfahrensschema nicht dargestellt.

Über eine Argonübergangsleitung 14 wird ein argonhaltiger Sauerstoffstrom aus dem unteren Bereich der Niederdrucksäule 5 (unterhalb der Sumpfflüssigkeitsleitung 6) entnommen, in den unteren Bereich einer Rohargonsäule 15 geleitet und dort in ein Rohargonprodukt 16 und eine Restfraktion 17 zerlegt. Die Restfraktion wird in die Niederdrucksäule zurückgeleitet. Sie kann entweder über die Leitung 14 zurückfließen (falls ein entsprechendes Gefälle vorhanden ist) oder, wie in Figur 1 gezeigt, mittels einer Pumpe 18 über eine eigene Leitung 17 gefördert werden.

Der Kopf der Rohargonsäule wird durch einen Rohargon-Kondensator 19 gekühlt, auf dessen Verdampfungsseite über Leitung 20 herangeführte Sumpfflüssigkeit aus der Hochdrucksäule 3 verdampft wird. Die verdampfte Fraktion wird über Leitung 21 zur Niederdrucksäule geführt. Sie kann beispielsweise auf Höhe der Sumpfflüssigkeitsleitung 6 eingeleitet werden. Besonders vorteilhaft ist jedoch eine Einspeisung zwischen Mündung der Sumpfflüssigkeitsleitung 6 und Anschluss der Argonübergangsleitung 14.

Auf bekannte Weise wird bei dem Verfahren Kälte durch arbeitsleistende Entspannung eines oder mehrerer Prozessströme in einer oder mehreren Turbinen erzeugt. Dies ist in dem vereinfachten Schema nicht dargestellt.

Die Niederdrucksäule 5 weist in dem Ausführungsbeispiel die folgenden Abschnitte auf, die durch jeweils einen Packungsabschnitt aus geordneter Packung gebildet werden:
A Rein-Stickstoff-Abschnitt (oberhalb der Unreinstickstoffleitung 11)
B Unrein-Stickstoff-Abschnitt (begrenzt durch Unreinstickstoffleitung 11 und Sumpfflüssigkeitsleitung 6)
C Unrein-Sauerstoff-Abschnitt (begrenzt durch Sumpfflüssigkeitsleitung 6 und Leitung 21 zur Einführung der teilweise verdampften Fraktion aus dem Rohargonkondensator 19),
D Argon-Zwischenabschnitt (begrenzt durch Leitung 21 zur Einführung der verdampften Fraktion aus dem Rohargonkondensator 19 und Entnahmeleitung 14 für die in der Rohargonsäule zu zerlegende argonhaltige Sauerstofffraktion),
E Sauerstoff-Abschnitt (unterhalb der Entnahmeleitung 14 für die in der Rohargonsäule zu zerlegende argonhaltige Sauerstofffraktion und unmittelbar über dem Sumpfverdampfer = Hauptkondensator 4).

Bei dem Ausführungsbeispiel werden folgende Stoffaustauschelemente in den verschiedenen Abschnitten der Niederdrucksäule 5 eingesetzt:
A Rein-Stickstoff-Abschnitt: Geordnete Aluminiumpackung, die aus gefalteten Metallblechen einer Blechstärke von 0,10 mm besteht und eine spezifische Oberfläche von mehr als 1000 m²/m³, insbesondere von 1250 m²/m³ aufweist
B Unrein-Stickstoff-Abschnitt: Geordnete Aluminiumpackung, die aus gefalteten Metallblechen einer Blechstärke von 0,10 mm besteht und eine spezifische Oberfläche von 750 m²/m³ aufweist
C Unrein-Sauerstoff-Abschnitt: Geordnete Aluminiumpackung, die aus gefalteten Metallblechen einer Blechstärke von 0,10 mm besteht und eine spezifische Oberfläche von 750 m²/m³ aufweist
D Argon-Zwischenabschnitt: Geordnete Aluminiumpackung, die aus gefalteten Metallblechen einer Blechstärke von 0,10 mm besteht und eine spezifische Oberfläche von mehr als 1000 m²/m³, insbesondere von 1250 m²/m³ aufweist
E Sauerstoff-Abschnitt: Geordnete Kupferpackung, die aus gefalteten Metallblechen aus Cu-DHP R200 nach DIN EN 13599 einer Blechstärke von 0,05 mm besteht und eine spezifische Oberfläche von mehr als 1000 m²/m³, insbesondere von 1250 m²/m³ aufweist

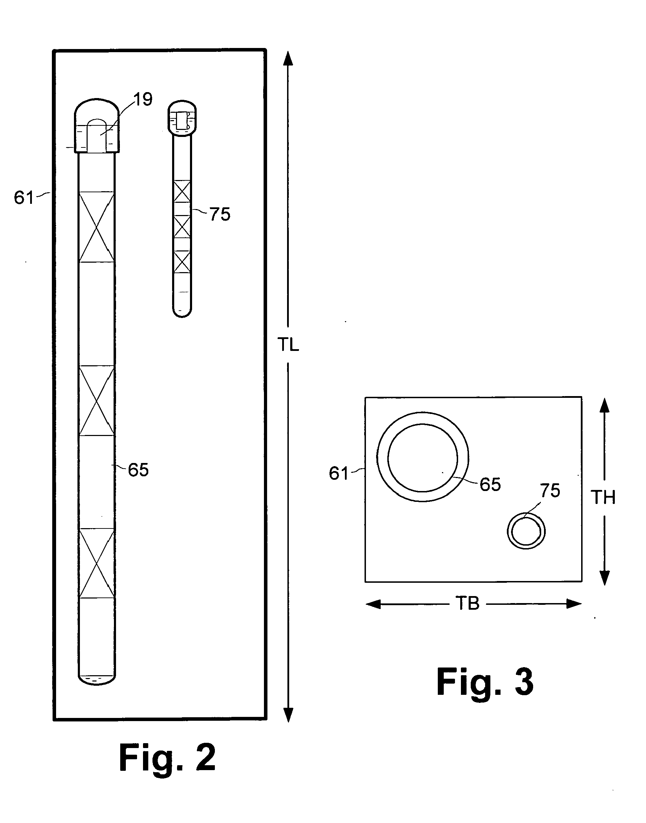

Die Rohargonsäule 15 weist fünf Stoffaustausch-Abschnitte auf, von denen in der Figur 2 nur drei beispielhaft dargestellt sind. Diese werden in dem Ausführungsbeispiel alle durch geordnete Packung gebildet, die aus gefalteten Aluminiumblechen einer Blechstärke von 0,10 mm besteht und eine spezifische Oberfläche von mehr als 1000 m²/m³, vorzugsweise mehr als 1.150 m²/m³, insbesondere von 1250 m²/m³ aufweist. Die Bleche weisen eine Grobfaltung, eine Lochung sowie eine Feinriffelung auf.

Die Hochdrucksäule 3 kann grundsätzlich ganz oder teilweise mit geordneter Packung, zum Beispiel aus Aluminium ausgestattet sein. In dem Ausführungsbeispiel werden jedoch ausschließlich Siebböden verwendet.

Abweichend von dem Ausführungsbeispiel können innerhalb eines oder mehrerer der oben aufgeführten Abschnitte auch Kombinationen unterschiedlicher Arten von Stoffaustauschelementen eingesetzt werden, zum Beispiel eine Kombination von geordneten Packungen unterschiedlicher spezifischer Oberfläche oder eine Kombination von geordneter Packung und konventionellen Rektifizierböden.

In Abweichung von der in Figur 1 dargestellten Ausführungsform kann ein Teil der zu zerlegenden Luft in einer Turbine arbeitsleistend entspannt und unter Umgehung der Vorzerlegung in der Hochdrucksäule 3 direkt in die Niederdrucksäule 5 eingeblasen, beispielsweise zwischen den Abschnitten C und D oder zwischen den Abschnitten B und C. In weiter abweichenden Ausführungsformen kann die Rohargonsäule weggelassen und/oder eine Mischsäule ergänzt werden, in der flüssiges Sauerstoffprodukt der Niederdrucksäule in direktem Stoffaustausch mit einem Teil der Einsatzluft verdampft und schließlich als gasförmiges Unrein-Sauerstoffprodukt gewonnen wird.

In einer weiteren alternativen Ausführungsform wird in mindestens einem Teilbereich der Rohargonsäule 15 eine geordnete Packung eingesetzt, die aus gefalteten Kupferblechen gebildet ist, eine spezifische Oberfläche von mehr als 750 m²/m³, insbesondere von mehr als 1.000 m²/m³ oder mehr als 1.150 m²/m³, beispielsweise von 1.250 aufweist, wobei die Kupferbleche eine Blechstärke von 0,1 mm oder weniger aufweisen, beispielsweise von 0,05 mm.

In den Figuren 2 und 3 sind die entsprechenden Teile der Vorrichtung mit denselben Bezugszeichen wie in Figur 1 bezeichnet.

Das transportable Paket, das Teil einer Anlage nach Figur 1 ist, wird von einer Coldbox 61 umhüllt, welche die Form eines Quaders aufweist. Wände und Dach der Coldbox 61 werden von Stahlträgerstrukturen gebildet, die mit Metallblechen verkleidet sind. Der Innenraum der Coldbox ist zwischen Anlagenteilen und den Außenwänden mit einem pulverförmigen Isoliermaterial wie zum Beispiel Perlite gefüllt.

Die Coldbox 61 enthält die Rohargonsäule 65 und eine Reinargonsäule 75, die auf die bekannte Weise mit der Rohargonsäule und der übrigen Luftzerlegungsanlage verknüpft ist - siehe zum Beispiel Ullmann's Encyclopedia of Industrial Chemistry, 5th Ed., Vol. A17, 1991, pp 510-511 (506-513). Außerdem sind die zugehörigen Leitungen, Armaturen und Messeinrichtungen in der Coldbox 61 untergebracht, in diesem Beispiel aber keine weiteren Trennsäulen. Die Coldbox 61 wird als Paket komplett vorgefertigt und anschließend zum Aufstellort transportiert.

In den Figuren 2 und 3 sind die Maße der Coldbox dargestellt, welche die Transportlänge TL, die Transporthöhe TH und die Transportbreite TB des Pakets bestimmen.

In abweichenden Ausführungsbeispielen des erfindungsgemäßen Pakets kann die Coldbox zusätzlich zu einen oder mehrere der folgenden Apparate enthalten:
- Doppelsäule mit Hochdrucksäule, Hauptkondensator und Niederdrucksäule
- Zusätzliche Säule zur Reinstsauerstoffgewinnung
- Hauptwärmetauscher
- Unterkühlungsgegenströmer

Eine weitere Ausführungsvariante der Niederdrucksäule 5 unterscheidet sich von der oben beschriebenen dadurch, dass der Sauerstoff-Abschnitt E eine geordnete Packung aus gefalteten Aluminiumblechen enthält.

Eine andere Ausführungsvariante unterscheidet sich von den zuvor beschriebenen dadurch, dass auch der Argon-Zwischenabschnitt D die Aluminium-Packung besonders hoher spezifischer Oberfläche des Sauerstoff-Abschnitts E enthält.

In einer dritten beziehungsweise einer vierten Ausführungsvariante wird statt der besonders dichten Aluminiumpackung der ersten und zweiten Variante jeweils eine Kupferpackung mit einer Blechstärke von 0,1 mm und einer spezifischen Oberfläche von 1200 m²/m³ eingesetzt.

## Patentansprüche

1. Transportables Paket mit einer Coldbox (61), in deren Inneren mindestens eine Rohargonsäule (65) einer Tieftemperatur-Luftzerlegungsanlage angeordnet ist, die dazu bestimmt ist, in der Tieftemperatur-Luftzerlegungsanlage mit einer Niederdrucksäule zusammenzuwirken und einen Rohargon-Kopfkondensator (19) aufweist, der als Kondensator-Verdampfer ausgebildet ist, wobei die Rohargonsäule (65) Stoffaustauschelemente enthält, wobei die Stoffaustauschelemente in mindestens einem Teilbereich der Rohargonsäule (65) durch eine geordnete Packung gebildet werden, die aus gefalteten Metallblechen gefertigt ist,
**dadurch gekennzeichnet, dass**
- die Metallbleche eine Blechstärke von 0,2 mm oder weniger aufweisen und dass
- die geordnete Packung eine spezifische Oberfläche von mindestens 1000 m²/m³ aufweist.

2. Paket nach Anspruch 1, **dadurch gekennzeichnet, dass** die Höhe der Coldbox (61) geringer als 47 Meter ist.

3. Paket nach einem der Ansprüche 1 bis 2, **dadurch gekennzeichnet, dass** der minimale Durchmesser des Querschnitts der Coldbox (61) nicht mehr als 4,15 Meter beträgt.

4. Paket nach einem der Ansprüche 1 bis 4, **dadurch gekennzeichnet, dass** der Durchmesser des Querschnitts der Coldbox (61) senkrecht zum minimalen Durchmesser kleiner als 4,95 Meter ist.

5. Paket nach einem der Ansprüche 1 bis 5, **dadurch gekennzeichnet, dass** in der Coldbox außerdem eine Niederdrucksäule (5) angeordnet ist, wobei der Verdampfungsraum des Rohargon-Kopfkondensators (19) über eine Zwei-Phasen-Rohrleitung (21) mit der Niederdrucksäule (5) verbunden ist und die Zwei-Phasen-Rohrleitung (21) so ausgebildet ist, dass im Betrieb der Tieftemperatur-Luftzerlegungsanlage sowohl Gas als auch Flüssigkeit aus dem Verdampfungsraum des Kopfkondensators in die Niederdrucksäule (5) fließen.

6. Paket nach einem der Ansprüche 1 bis 6, **dadurch gekennzeichnet, dass** die Metallbleche der geordneten Packung, die eine Blechstärke von 0,2 mm oder weniger aufweisen, aus Kupfer bestehen und insbesondere eine Blechstärke von 0,1 mm oder weniger aufweisen.

7. Paket nach einem der Ansprüche 1 bis 7, **dadurch gekennzeichnet, dass** die geordnete Packung eine spezifische Oberfläche von mehr als 1.000 m²/m³, insbesondere von mehr als 1.150 m²/m³ aufweist.

8. Paket nach einem der Ansprüche 1 bis 8, **dadurch gekennzeichnet, dass** die Tieftemperatur-Luftzerlegungsanlage zur Verarbeitung von mehr als 10.000Nm³/h und weniger als 250.000 Nm³/h Einsatzluft im Normalbetrieb ausgelegt ist.

9. Paket nach einem der Ansprüche 1 bis 8, **dadurch gekennzeichnet, dass** die Rohargonsäule einteilig ausgebildet ist.

10. Verfahren zum Herstellen einer Tieftemperatur-Luftzerlegungsanlage, bei dem
- eine Coldbox (61) als transportables Paket gemäß einem der Ansprüche 1 bis 9 zum Aufstellungsort transportiert wird,
- die Coldbox (61) am Aufstellungsort mit einer weiteren Coldbox, die eine Niederdrucksäule (5) enthält, einem Luftverdichter zum Verdichten von Einsatzluft, mit einer Reinigungseinheit für verdichtete Einsatzluft und mit einem Hauptwärmetauscher (2) zum Abkühlen gereinigter Einsatzluft verbunden wird.
